# EUROPÄISCHE PATENTANMELDUNG

(11) **EP 1 428 988 A2**
(43) Veröffentlichungstag der Anmeldung: **16.06.2004**
(21) Anmeldenummer: 03024991.6
(22) Anmeldetag: 30.10.2003
(51) Int. Cl.: F01L 1/02

(54) **Vorrichtung zur Führung einer Kette und Verfahren hierzu**

(30) Priorität: 12.12.2002 DE 10258030
(71) Anmelder: DaimlerChrysler AG, 70567 Stuttgart (DE)
(72) Erfinder: Kremer, Adolf, 71686 Remseck (DE); Leipner, Georg, 73266 Bissingen (DE)

(57) **Zusammenfassung**

Die Erfindung bezieht sich auf eine Vorrichtung zur Führung einer Kette (1) mit einer Führungsschiene (2), die aus einem mit einer ebenen Auflagefläche (3) für die Kette (1) versehenenen Grundkörper (2a) besteht, an welchen sich seitliche bogenförmige Abschnitte (4) anschliessen, die in Borde (2b) übergehen, und ein Verfahren hierzu.
Um eine Vorrichtung und ein Verfahren zur Führung einer Steuerkette (1) einer Brennkraftmaschine so zu verbessern, dass neben der Führung der Kette (1) in Kettenlängsrichtung zusätzlich eine sichere Führung der Kette (1) in Kettenquerrichtung erzielt wird, wird **erfindungsgemäss** vorgeschlagen, dass vor der ersten Inbetriebnahme der Vorrichtung die Breite (b_{A}) der Auflagefläche (3) für die Kette (1) geringer als die Breite (b_{K}) der Kette (1) ist und dass vor erstmaliger Inbetriebnahme der Vorrichtung die Kette (1) mit ihren äusseren Umfangslinien (10) der äusseren Kettenlaschen (7) an den bogenförmigen Abschnitten (4) der Führungsschiene (2) zur Anlage kommt.

## Beschreibung

Die Erfindung betrifft eine Vorrichtung zur Führung einer Kette gemäss dem Oberbegriff des Patentanspruchs 1 sowie einem Verfahren hierzu nach dem Oberbegriff des Anspruchs 9.

Aus der DE 43 10 306 A1 ist eine gattungsgemässe Vorrichtung zur Führung einer Kette bekannt. Die Vorrichtung ist im Steuertrieb einer Brennkraftmaschine eingesetzt und weist eine Führungsschiene auf, die eine Trägerstruktur und einen mit der Trägerstruktur fest verbundenen Gleitbelag umfasst. Der Gleitbelag besitzt eine Auflagefläche für die Steuerkette und seitlich hochgestellte Borde, die der Führung der auf der Auflagefläche laufenden Kette dienen.

Zwar wird bei der gattungsgemässen Vorrichtung die Steuerkette in Kettenlängsrichtung in der Führungsschiene geführt, jedoch ist die Kette zwischen den Borden mit Spiel geführt, d.h. sie bewegt sich in Kettenquerrichtung. Die so gestaltete Vorrichtung ist für eine in Querrichtung nachgiebige Kette nicht geeignet, da diese aufgrund der im Betrieb der Brennkraftmaschine auftretenden dauernden Lastwechsel in der Führungsschiene zu seitlichen Ausschlägen und damit unerwünschten Querschwingungen angeregt wird. Durch die Querschwingungen bzw. das damit verbundene Kettenschlagen wird die Lebensdauer und die Drehzahlfestigkeit des Steuertriebes beeinträchtigt.

Zum allgemeinen technischen Hintergrund wird noch auf die DE 197 21 199 C1 verwiesen.

Der Erfindung liegt die Aufgabe zugrunde, eine Vorrichtung und ein Verfahren zur Führung einer Kette so zu verbessern, dass neben der Führung der Kette in Kettenlängsrichtung zusätzlich eine sichere Führung der Kette in Kettenquerrichtung erzielt wird.

Diese Aufgabe wird bei einer Vorrichtung erfindungsgemäss durch die im kennzeichnenden Teil des Anspruchs 1 angegebenen Merkmale und bei einem Verfahren erfindungsgemäss durch die im kennzeichnenden Teil des Anspruchs 9 angegebenen Merkmale gelöst.

Weitere Ausgestaltungen und Vorteile der Erfindung gehen aus den übrigen Unteransprüchen und der Beschreibung hervor.

Durch die Erfindung wird erreicht, dass die Kette in allen Richtungen sicher geführt ist und insbesondere Axialschwingungen der Kette auf der Führungsschiene vermieden werden. Die erfindungsgemässe Kettenführung erlaubt ferner, die Verwendung einer konventionellen Führungsschiene, bei deren Auswahl lediglich das Verhältnis von Breite der Kettenauflagefläche zu Breite der Kette sowie der Werkstoff berücksichtigt werden muss. Durch die Erfindung wird erreicht, dass die Führungsschiene kompakter und schmäler ausgelegt werden kann, da sich die äusseren Kettenlaschen der Kette beim erstmaligen Gebrauch seitlich in die Führungsschiene eingraben und sich somit die benötigte Breite der Kettenauflagefläche schaffen.

In den Zeichnungen ist die Erfindung anhand von einem Ausführungsbeispiel mit weiteren Einzelheiten näher erläutert, und zwar zeigen:
- Fig. 1: eine Vorrichtung zur Führung einer Kette vor der erstmaligen Inbetriebnahme, wobei die Breite der Auflagefläche für die Kette geringer als die Breite der Kette ist, und
- Fig. 2: die Vorrichtung zur Führung einer Kette einige Zeit nach der erstmaligen Inbetriebnahme, wobei die Breite der Auflagefläche für die Kette nun in etwa der Breite der Kette entspricht.

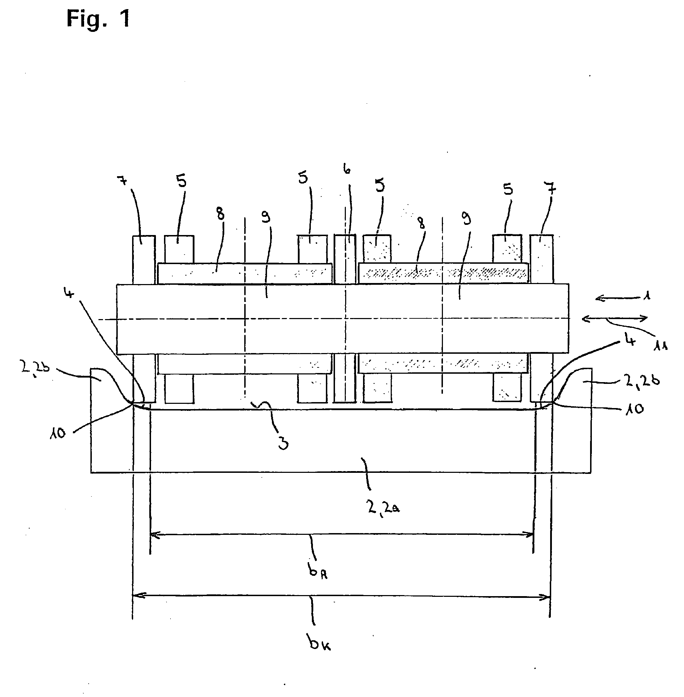

Figur 1 zeigt eine Vorrichtung zur Führung einer Kette 1, insbesondere einer Steuerkette in einem Steuertrieb einer Brennkraftmaschine. Die Vorrichtung umfasst eine Führungsschiene 2, die aus einem mit einem ebenen Nennprofil als Auflagefläche 3 für die Kette 1 versehenen Grundkörper 2a besteht. Zu beiden Längsseiten des Grundkörpers 2a schliessen sich an das ebene Nennprofil 3 bogenförmige Abschnitte 4 an, die in Borde 2b übergehen. Vorteilhafterweise weist die Führungsschiene 2 im Querschnitt ein in etwa U-förmiges Profil auf, wobei die Biegesteifigkeit durch die Abmessungen des Grundkörpers 2a und der Borde 2b beeinflussbar ist.

Bei der Kette 1 handelt es sich um eine doppelreihige Kette, d.h. eine Kette mit zwei parallel verlaufenden und miteinander verbundenen Reihen. Eine solche doppelreihige Kette 1 wird eingesetzt, wenn von der Kurbelwelle der Brennkraftmaschine ein besonders hohes Drehmoment auf die Nockenwellen übertragen werden soll. Die Kette 1 ist aus inneren Laschen 5, 6 und aus äusseren Laschen 7 gefertigt, die durch von Hülsen 8 umgebenene Bolzen 9 gelenkig miteinander verbunden sind. Selbstverständlich kann es sich bei der Kette 1 auch um eine Einfachkette oder eine Mehrfachkette handeln, wie auch ein anderer Kettenaufbau möglich wäre.

Die Führungsschiene 2 besteht üblicherweise aus einem Kunststoff, der den jeweiligen Anforderungen angepasst ist, d.h. der Kunststoff gestattet einerseits ein möglichst reibungsarmes Gleiten der Kette 1 in Kettenlaufrichtung und lässt andererseits ein teilweises Eingraben der äusseren Kettenlaschen 7 zu. Vorzugsweise kommt ein Polyamid zum Einsatz.

Figur 1 zeigt die Vorrichtung vor der ersten Inbetriebnahme. Die Breite b_{A} der Auflagefläche 3 der Führungsschiene 2 für die Kette 1 ist geringer als die Breite b_{K} der Kette 1 bzw. der Abstand zwischen den äusseren Umfangslinien 10 der beiden Kettenlaschen 7. Dadurch kommen nur die äusseren Umfangslinien 10 der äusseren Kettenlaschen 7 an den bogenförmigen Abschnitten 4 der Führungsschiene 2 zur Anlage und nicht alle Laschen 5 bis 7 der Kette 1 mit ihrem Umfang.

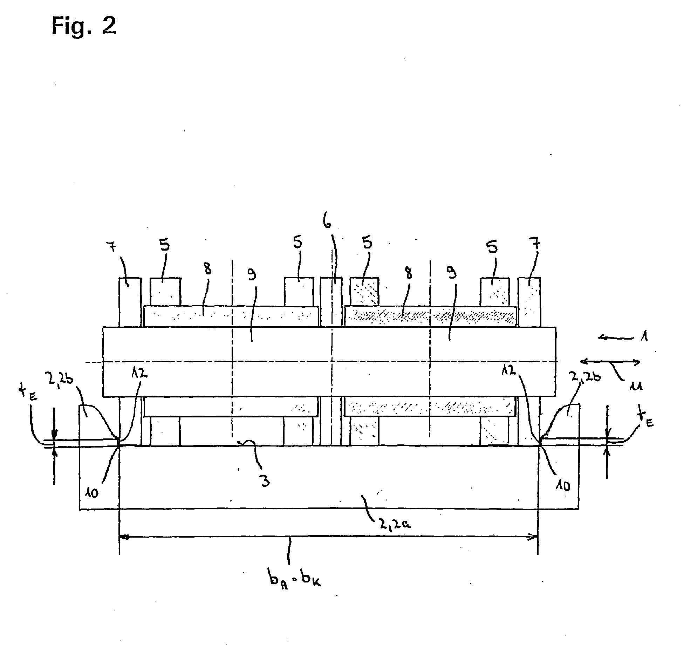

Beim bestimmungsgemässen Einsatz der Vorrichtung wird die Kette 1 in senkrecht zur Kettenquerrichtung 11 verlaufende Kettenlängsrichtung über die Führungsschiene 2 gezogen. Erfindungsgemäss gräbt sich gemäss Figur 2 die äussere Umfangslinie 10 der äusseren Kettenlaschen 7 beim erstmaligen Betrieb der Vorrichtung im Bereich der bogenförmigen Abschnitte 4 unter Ausbildung von Vorsprüngen 12 so tief in die Führungsschiene 2 ein bis alle Kettenlaschen 5 bis 7 umfangsseitig an der Auflagefläche 3 aufliegen, wobei die Eingrabungstiefe t_{E} insbesondere 0,05 mm ≤ t_{E} ≤ 0,2 mm und vorzugsweise 0,09 mm beträgt. Die Kette 1 ist durch die Vorsprünge 12 gegen seitliche Auslenkbewegungen geführt. Die Kette 1 wird somit in Längsrichtung durch das ebene Nennprofil 3 sowie seitlich durch die durch das Eingraben entstandenen Vorsprünge 12 geführt, d.h. die Kette 1 ist sowohl in Kettenlängsrichtung als auch in Kettenquerrichtung 11 geführt. Die Breite b_{A} der Auflagefläche 3 für die Kette 1 entspricht nun in etwa der Breite b_{K} der Kette 1 bzw. dem Abstand zwischen den äusseren Umfangslinien 10 der beiden äusseren Kettenlaschen 7.

Die Führungsschiene 2 kann in einfacher Weise, beispielsweise durch einen Spritzgiessvorgang hergestellt werden. Aufgrund des U-förmigen Profils ist kein Formschieber erforderlich. Ein einfaches zweiteiliges Werkzeug ohne Formschieber ist hinreichend.

Die erfindungsgemäss aufgebaute Führungsschiene 2 kann mit vergleichbarem Aufbau auch als Spannschiene eingesetzt werden.

## Patentansprüche

1. Vorrichtung zur Führung einer Kette (1) mit einer Führungsschiene (2), die aus einem mit einem ebenen Nennprofil als Auflagefläche (3) für die Kette (1) versehenenen Grundkörper (2a) besteht, an welchen sich seitliche bogenförmige Abschnitte (4) anschliessen, die in Borde (2b) übergehen,
**dadurch gekennzeichnet,**
**dass** vor der ersten Inbetriebnahme der Vorrichtung die Breite (b_{A}) der Auflagefläche (3) für die Kette (1) geringer als die Breite (b_{K}) der Kette (1) ist.

2. Vorrichtung zur Führung einer Kette nach Anspruch 1,
**dadurch gekennzeichnet,**
**dass** vor der ersten Inbetriebnahme der Vorrichtung die äusseren Umfangslinien (10) der äusseren Kettenlaschen (7) an den bogenförmigen Abschnitten (4) zur Anlage kommen.

3. Vorrichtung zur Führung einer Kette nach Anspruch 1 oder 2,
**dadurch gekennzeichnet,**
**dass** kurz nach der ersten Inbetriebnahme der Vorrichtung die Breite (b_{A}) der Auflagefläche (3) für die Kette (1) in etwa der Breite (b_{K}) der Kette (1) entspricht.

4. Vorrichtung zur Führung einer Kette nach einem der vorhergehenden Ansprüche,
**dadurch gekennzeichnet,**
**dass** kurz nach der ersten Inbetriebnahme der Vorrichtung die Kette (1) in ihrer gesamten Breite (b_{K}) auf der Führungsschiene (2) zur Anlage kommt.

5. Vorrichtung zur Führung einer Kette nach einem der vorhergehenden Ansprüche,
**dadurch gekennzeichnet,**
**dass** das Verhältnis von Kettenbreite (b_{K}) und Auflageflächenbreite (b_{A}) so bemessen ist, das sich die äussere Umfangslinie (10) der äusseren Kettenlaschen (7) beim erstmaligen Betrieb der Vorrichtung im Bereich der bogenförmigen Abschnitte (4) in die Führungsschiene (2) eingräbt.

6. Vorrichtung zur Führung einer Kette nach Anspruch 5,
**dadurch gekennzeichnet,**
**dass** die Eingrabungstiefe (t_{E}) zwischen 0,05 mm und 0,2 mm beträgt und vorzugsweise 0,09 mm.

7. Vorrichtung zur Führung einer Kette nach einem der vorhergehenden Ansprüche,
**dadurch gekennzeichnet,**
**dass** die Führungsschiene (2) aus Kunststoff besteht.

8. Vorrichtung zur Führung einer Kette nach einem der vorhergehenden Ansprüche,
**dadurch gekennzeichnet,**
**dass** das Material der Führungsschiene (2) weicher als das Material der Kette (1) ist.

9. Vorrichtung zur Führung einer Kette nach einem der vorhergehenden Ansprüche,
**dadurch gekennzeichnet,**
**dass** die Vorrichtung im Steuertrieb einer Brennkraftmaschine eingesetzt ist.

10. Verfahren zur Führung einer Kette (1), insbesondere zum Betrieb der Vorrichtung nach einem der Ansprüche 1 bis 8, wobei die Kette (1) in einer Führungsschiene (2) geführt ist, die aus einem mit einem ebenen Nennprofil als Auflagefläche (3) für die Kette (1) versehenenen Grundkörper (2a) besteht, an welchen sich seitliche bogenförmige Abschnitte (4) anschliessen, die in Borde (2b) übergehen, **gekennzeichnet durch** folgende Schritte,
- vor erstmaliger Inbetriebnahme der Vorrichtung kommt die Kette (1) mit ihren äusseren Umfangslinien (10) der äusseren Kettenlaschen (7) an den bogenförmigen Abschnitten (4) der Führungsschiene (2) zur Anlage, wobei die Breite (b_{A}) der Auflagefläche (3) für die Kette (1) geringer als die Breite (b_{K}) der Kette (1) ist,
- bei Inbetriebnahme der Vorrichtung graben sich die äusseren Umfangslinien (10) der äusseren Kettenlaschen (7) im Bereich der bogenförmigen Abschnitte (4) in die Führungsschiene (2) ein, wodurch eine Fixierung der Kette (1) in Querachsenrichtung (11) erfolgt.
- kurz nach Inbetriebnahme der Vorrichtung die Breite (b_{A}) der Auflagefläche (3) für die Kette (1) im wesentlichen der Breite (b_{K}) der Kette (1) entspricht, wo**durch** die Kette (1) in ihrer ganzen Breite (b_{K}) an der Anlagefläche (3) der Führungschiene (2) zur Anlage kommt.
